Europäisches Patentamt

European Patent Office

Office européen des brevets

(19)

(11) Numéro de publication: **0 270 415 B1**

(12) **FASCICULE DE BREVET EUROPEEN**

(45) Date de publication de fascicule du brevet:
06.11.91

(51) Int. Cl.⁵: **G05D 1/02**, G05D 1/03

(21) Numéro de dépôt: 87402510.9

(22) Date de dépôt: 06.11.87

(54) **Système de guidage au sol d'un véhicule autonome.**

(30) Priorité: 07.11.86 FR 8615550

(43) Date de publication de la demande:
08.06.88 Bulletin 88/23

(45) Mention de la délivrance du brevet:
06.11.91 Bulletin 91/45

(84) Etats contractants désignés:
DE IT SE

(56) Documents cités:
FR-A- 2 211 907
FR-A- 2 326 320
FR-A- 2 474 714
GB-A- 2 143 969

PATENT ABSTRACTS OF JAPAN, vol. 10, no.
97, (P-446)[2154], 15 avril 1986; & JP-A-60 230
211 (SHINKOUBE DENKI K.K.) 15-11-1985

(73) Titulaire: **REGIE NATIONALE DES USINES RE-
NAULT**
**Boîte postale 103 8-10 avenue Emile Zola**
**F-92109 Boulogne-Billancourt(FR)**

(72) Inventeur: **Hermann, Jean-Paul**
**24, rue du Village**
**F-91300 Massy(FR)**
Inventeur: **Pavageau, Luc**
**Blandan**
**F-72190 Neuville sur Sarthe(FR)**
Inventeur: **Monnet, Bernard**
**233, rue Philippe Triaire**
**F-92000 Nanterre(FR)**

(74) Mandataire: **Ernst-Schonberg, Michel et al**
**REGIE NATIONALE DES USINES RENAULT (S.**
**0267) 8 & 10, avenue Emile Zola**
**F-92109 Boulogne Billancourt Cédex(FR)**

## Description

La présente invention se rapporte à un système de guidage au sol d'un véhicule autonome à roues entraînées par une motorisation et équipé d'un changement de direction et d'un système de détection embarqué coopérant avec un repère lié au sol.

On utilise des véhicules ou chariots sans conducteur. Par exemple, dans les ateliers, ces chariots servent à alimenter des machines en pièces ou en outils. Ces véhicules sont communément guidés par un fil enterré dans le sol parcouru par un courant électrique ou encore par une bande réfléchissante peinte sur le sol. L'information issue de ces détecteurs est traitée par voie électronique ou informatique. L'inconvénient majeur de ces systèmes réside dans leur manque de souplesse quand il s'agit de modifier les trajectoires, et aussi dans l'impossibilité d'effectuer des manoeuvres de dépassements.

On a déjà étudié des véhicules mobiles robotisés dans lesquels le système de locomotion comprend deux roues motrices indépendantes actionnées par des moteurs pas à pas. Une électronique commande ces moteurs de manière à contrôler la vitesse et la trajectoire du véhicule. Ces véhicules manquent de précision. (Voir par exemple le document FR-A-2474714).

La présente invention a pour but de fournir un système de guidage de véhicule autonome robotisé assurant un guidage en deux dimensions, une bonne précision de parcours lors des déplacements et un bon positionnement aux postes d'arrêt. Ce système ne nécessite pas d'infrastructure lourde. De plus, il permet une grande flexibilité de guidage du fait qu'il n'est pas lié à un conducteur fixé au sol.

Le système selon l'invention est caractérisé par les caractéristiques mentionnées dans les revendications.

L'invention va maintenant être décrite avec plus de détails en se référant à un mode de réalisation donné à titre d'exemple et représenté par le desisns annexés sur lesquels :

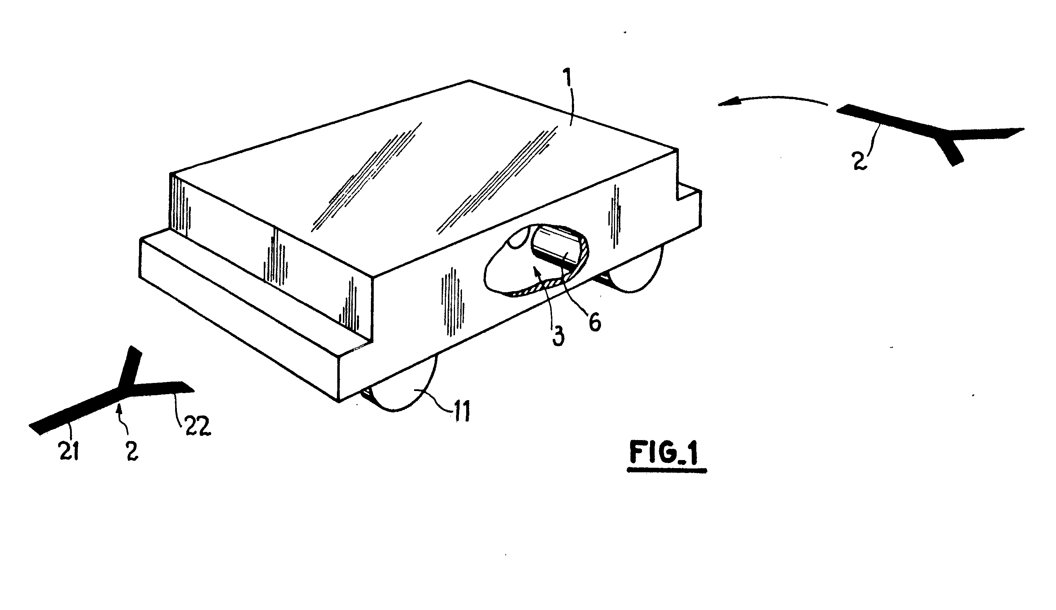

- la figure 1 est un schéma d'ensemble montrant le véhicule équipé du système de guidage selon l'invention ;

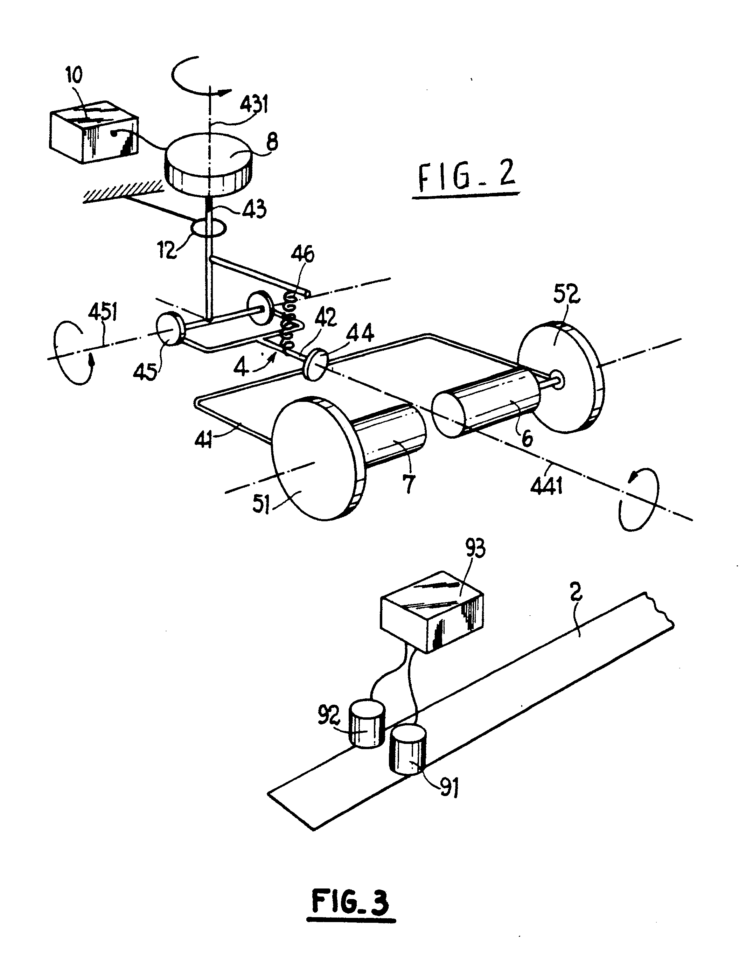

- la figure 2 est une vue de détail d'une partie du système de guidage embarqué sur le véhicule ;
- la figure 3 est une vue de détail d'une autre partie du système de guidage.

En se référant au dessus, l'invention s'applique à une véhicule automoteur et autonome 1 équipé de roues 11. Il comporte des roues motrices accouplées à un moteur d'entraînement connu (moteur électrique alimenté par batteries par exemple). Il comporte des roues directrices accouplées à un changement de direction asservi.

Le chariot se déplace entre des postes d'arrêt déterminés. Des repères localisés 2 sont positionnés au sol de manière discontinue. Ces repères 2 sont localisés de préférence aux postes d'arrêt. Chaque repère est réalisé à l'aide d'un ruban métallique (clinquant) collé au sol.

De préférence, chaque repère 2 est constitué par une partie 22 en V et par une partie rectiligne 21 de manière que l'ensemble trace au sol un Y.

Le véhicule est équipé d'un capteur odométrique, repéré 3, capable de mesurer le chemin parcouru avec précision. Ce capteur odométrique 3 est constitué par un châssis articulé 4 équipé de deux roues 51 et 52 et relié au véhicule par l'intermédiaire d'un pivot vertical 43 lui permettant de pivoter librement au dessous du véhicule. Le châssis articulé 4 se compose d'un chariot 41 monté sur les deux roues 51 et 52 qui sont libres et indépendantes l'une de l'autre. Le chariot 41 est relié par l'intermédiaire d'un pivot 44 à un timon oscillant 42 qui est relié par l'intermédiaire d'une articulation transversale 45 à axe horizontal au pivot 43. Le chariot à roues est repoussé vers le sol au moyen d'un ressort 46 monté entre le pivot 43 et le timon 42.

Le pivot 43 est guidé autour d'un axe vertical par un palier 12 solidaire du véhicule. Le pivot 44 permet le pivotement du chariot à roues autour d'une axe situé dans un plan vertical et sensiblement horizontal.

Le capteur odométrique comporte deux codeurs 6, 7 de position reliés chacun à une roue 51 ou 52, chacune des deux roues étant libre et indépendante de l'autre. Chaque codeur 6 ou 7 mesure le chemin parcouru par la roue associée 51 ou 52. Le capteur odométrique comporte un troisième codeur de position 8 qui mesure l'orientation du train de roues autour de l'axe de pivot 43.

Les roues 51 et 52 sont minces et légères. Elles sont déchargées de tout rôle de portance ou de propulsion. La périphérie de chaque roue est effilée de manière que le contact avec le sol poit ponctuel et que la distance entre les roues soit bien définie.

Les codeurs 6, 7, 8 sont reliés à une unité de traitement et de calcul 10 embarquée sur le véhicule. Cette unité de traitement et de calcul 10 permet à partir des indications des codeurs 6, 7, 8 de calculer la position et l'orientation du véhicule dans le plan où il évolue. Des algorithmes convenables permettent éventuellement de filtrer les signaux pour éliminer les effets parasites, par exemple le passage d'une roue sur une bosse ou un creux.

L'unité de traitement et de calcul envoie des informations de commande à la motorisation des roues motrices 11 et au changement de direction de manière à asservir le véhicule sur une trajectoire prédéfinie ou calculée par tout moyen en temps réel ou différé.

Le véhicule est équipé d'un système de détection des repères 2. Ce système se compose de deux détecteurs de proximité 91 et 92 qui sont de type inductif à courants de Foucault. Ils sont placés côte à côte et fixés à l'avant du véhicule ou sur son bloc de direction. Ces deux détecteurs 91 et 92 détectent la présence d'une marque 2 (ruban métallique) fixée au sol pour positionner localement le véhicule et initialiser sa position au départ et périodequement pendant le déplacement.

Un système d'asservissement 93 embarqué sur le véhicule reçoit les signaux de sortie des détecteurs 91 et 92 et agit sur le changement de direction. L'asservissement commande le changement de direction de manière que les signaux des deux détecteurs 91 et 92 soient égaux. Le véhicule s'aligne alors sur le ruban métallique 2. La disparition·des signaux localise avec précision l'extrémité du ruban et peut par exemple déclencher un arrêt ou remettre à jour la position du véhicule.

En variante, une paire de détecteurs de proximité similaires aux détecteurs 91 et 92 peut être installée à l'arrière du véhicule. Cette paire de détecteurs permet des mouvements en marche arrière et un meilleur repositionnement si le véhicule est à roues directrices indépendantes.

**Revendications**

1. Système de guidage au sol d'un véhicule autonome (1) à roues (11) entraîné par une motorisation et équipé d'un changement de direction et d'un système de détection (91, 92) coopérant avec un repère (2) lié au sol ainsi que d'un capteur odométrique (3) comportant deux codeurs (6,7) capable de mesurer avec précision le chemin parcouru par le véhicule autonome, les codeurs étant reliés à une unité de traitement et de calcul (10) embarquée commandant la motorisation des roues et le changement de direction, caractérisé en ce que le capteur odométrique (3) est constitué par un châssis articulé (4) qui comprend :

   - un chariot (41) monté sur les deux roues (51 et 52) portant lesdits codeurs (6,7) et qui sont libres et indépendantes l'une de l'autre en rotation,
   - un premier pivot (44) permettant le pivotement du chariot (41) à un timon oscillant (42) autour d'un axe perpendiculaire à un plan vertical parallèle à l'axe des roues (51, 52) et sensiblement horizontal,
   - une articulation (45) transversale à axe horizontal et perpendiculaire à l'axe du timon oscillant (42) servant de liaison du timon oscillant (42) avec un deuxième pivot parallèle à l'axe vertical (43), de manière que ledit pivot vertical (43) permet la libre rotation du châssis articulé (4) sous le véhicule autonome (1), cette rotation étant mesurée par un troisième, codeur (8) monté sur ledit pivot vertical, et que des détecteurs de proximité (91, 92) de type inductif à courants de Foucault placés côte à côte et à l'avant du véhicule autonome (1) détectent la présence d'une marque métallique (2) fixée au sol pour positionner localement le véhicule et initialiser sa position de départ et, éventuellement périodiquement pendant le déplacement.

2. Système de guidage au sol selon la revendication 1, caractérisé en ce que les détecteurs de proximité· (91, 92) sont portés par le bloc de direction.

3. Système de guidage au sol selon la revendication 1, caractérisé en ce qu'une deuxième paire de détecteurs de proximité similaires aux, détecteurs (91, 92) peut être installée à l'arrière du véhicule (1).

4. Système de guidage au sol selon les revendications 1 et 2, caractérisé en ce que les roues (51) et (52) sont légères, minces et que leur périphérie est affilée.

5. Système de guidage au sol selon les revendications 1, 2 et 3, caractérisé en ce que la distance entre les roues dudit chariot (41) est bien définie.

6. Système de guidage au sol selon la revendication 1, caractérisé en ce que le chariot (41) qui porte les roues (51, 52) est repoussé vers le sol par un ressort (46).

7. Système de guidage au sol selon l'une quelconque des revendications précédentes, caractérisé par le fait que chaque repère au sol (2) qui est constitué par du ruban d'acier collé sur le sol, a une forme en Y, l'ouverture des branches du Y étant placée de telle sorte que le véhicule se présente du côté de l'ouverture des branches du Y.

**Claims**

1. A system for ground guidance of an autonomous vehicle (1) with wheels (11) driven by a motor means and equipped with a direction changing means and a detection system (91, 92) co-operating with a reference means (2) connected to the ground and an odometric sensor (3) comprising two encoders (6, 7) and capable of accurately measuring the distance covered by the autonomous vehicle, the encoders being connected to an on-board processing and computing unit (10) controlling the motor means for the wheels and the direction changing means characterised in that the odometric sensor (3) is formed by a pivotally mounted chassis (4) which comprises:

- a carriage (41) mounted on the two wheels (51 and 52) carrying said encoders (6, 7) and which are free and independent of each other in respect of rotation,
- a first pivot (44) permitting pivotal movement of the carriage (41) at an oscillating bar (42) about an axis perpendicular to a vertical plane which is parallel to the axis of the wheels (51, 52) and substantially horizontal,
- a transverse pivotal mounting (45) with an axis which is horizontal and perpendicular to the axis of the oscillating bar (42) serving as a connection of the oscillating bar (42) with a second pivot parallel to the vertical axis (43) in such a way that said vertical pivot (43) permits free rotation of the pivotally mounted chassis (4) under the autonomous vehicle (1) said rotation being measured by a third encoder (8) mounted on said vertical pivot, and that proximity detectors (91, 92) of eddy current inductive type which are disposed side-by-side and at the front of the autonomous vehicle (1) detect the presence of a metal marker (2) which is fixed to the ground for locally positioning the vehicle and initialising its starting position and possibly periodically during displacement.

2. A ground guidance system according to claim 1 characterised in that the proximity detectors (91, 92) are carried by the steering unit.

3. A ground guidance system according to claim 1 characterised in that a second pair of proximity detectors which are similar to the detectors (91, 92) can be installed at the rear of the vehicle (1).

4. A ground guidance system according to claim 1 and 2 characterised in that the wheels (51) and (52) are light and thin and their periphery has a sharp edge.

5. A ground guidance system according to claim 1, 2 and 3 characterised in that the distance between the wheels of said carriage (41) is well-defined.

6. A ground guidance system according to claim 1 characterised in that the carriage (41) which carries the wheels (51, 52) is urged towards the ground by a spring (46).

7. A ground guidance system according to any one of the preceding claims characterised in that each ground reference means (2) which is formed by a steel strip glued to the ground is of a Y-shape, the opening of the limbs of the Y being placed in such a way that the vehicle presents itself from the side of the opening of the limbs of the Y-shape.

**Patentansprüche**

1. System zur Bodenleitung eines autonomen Fahrzeugs (1) mit durch einen Motor angetriebenen Rädern (11), das mit einem Lenkgetriebe sowie mit einer Meßanordnung (91, 92) ausgerüstet ist, die mit einer mit dem Boden verbundenen Markierung (2) zusammenarbeitet und das mit einem Wegstreckenfühler (3) ausgerüstet ist, der zwei Codierer (6, 7) aufweist zur präzisen Messung des vom autonomen Fahrzeugs durchfahrenen Weges, wobei die Codierer mit einer eingebauten Rechen- und Verarbeitungsvorrichtung (10) verbunden sind, die den Motorantrieb der Räder und das Lenkgetriebe steuert, dadurch gekennzeichnet, daß der Wegstreckenfühler (3) aus einem Gelenkrahmen besteht, der folgende Bauteile aufweist:

- ein Gestell (41), das mit zwei Rädern (51, 52) verbunden ist, die die Codierer (6, 7) tragen und die unabhängig voneinander frei drehbar sind,
- einen ersten Drehzapfen (44), der das Verschwenken des mit einer Drehwelle (42) versehenen Gestells (41) um eine Achse ermöglicht, die rechtwinklig zu einer senkrechten Ebene parallel zur Achse der Räder (51, 52) und im wesentlichen waagrecht verläuft,
- ein quer angeordnetes Gelenk (45), mit waagrechter Achse, die senkrecht zur Achse der Drehwelle (42) verläuft und als Verbindung dient der Drehwelle (42) mit einem zweiten Drehzapfen parallel zur senkrechten Achse (43), dergestalt, daß der senkrechte Drehzapfen (43) das freie Verdrehen des Gelenkrahmens (4) unterhalb des autonomen Fahrzeugs (1) ermöglicht, wobei diese Verdrehung mittels eines dritten Codierers gemessen wird, der am senkrechten Drehzapfen angeordnet ist

und

- Annäherungsdetektoren (91, 92), die induktiv mit FoucaultStrömen arbeiten und nebeneinander und vorne am autonomen Fahrzeug angeordnet sind und die das Vorhandensein einer am Boden befestigten metallischen Markierung (2) feststellen, um so das Fahrzeug stellenweise zu positionieren sowie seine Anfangsstellung, gegebenenfalls auch periodisch während des Vorschubes, festzulegen.

2. System zur Bodenleitung nach Anspruch 1, dadurch gekennzeichnet, daß die Annäherungsdetektoren (91, 92) am Lenkgetriebe befestigt sind.

3. System zur Bodenleitung nach Anspruch 1, dadurch gekennzeichnet, daß ein zweites Paar von Annäherungsdetektoren ähnlich den Detektoren (91, 92) hinten am Fahrzeug (1) befestigt werden kann.

4. System zur Bodenleitung nach Ansprüchen 1 und 2, dadurch gekennzeichnet, daß die Räder (51, 52) leicht und dünn sind und daß ihr Umfang eine scharfe Kante aufweist.

5. System zur Bodenleitung nach Ansprüchen 1, 2 und 3, dadurch gekennzeichnet, daß der Abstand zwischen den Rädern und dem Gestell (41) genau festgelegt ist.

6. System zur Bodenleitung nach Anspruch 1, dadurch gekennzeichnet, daß das Gestell (41), das die Räder (51, 52) trägt, durch eine Feder (46) in Richtung des Bodens beaufschlagt ist.

7. System zur Bodenleitung nach einem der vorhergehenden Ansprüche, dadurch gekennzeichnet, daß jede Bodenmarkierung (2) aus einem auf dem Boden aufgeklebten Y-förmigen Stahlband besteht, wobei die Öffnung zwischen den Armen des Y derart angeordnet ist, daß sie dem sich annähernden Fahrzeug zugewandt ist.

FIG.1

FIG. 2

FIG. 3